# EUROPEAN PATENT APPLICATION

(11) **EP 0 991 064 A2**
(43) Date of publication of application: **05.04.2000**
(21) Application number: 99119327.7
(22) Date of filing: 29.09.1999
(51) Int. Cl.: G11B 15/61, G11B 5/53

(54) **Rotary head**

(30) Priority: 30.09.1998 JP 27866098
(71) Applicant: SONY CORPORATION, Tokyo (JP)
(72) Inventor: Kayama, Shun, c/o Sony Corporation, Tokyo (JP); Ogasawara, Junichi, c/o Sony Corporation, Tokyo (JP)
(74) Representative: MÜLLER & HOFFMANN Patentanwälte

(57) **Abstract**

The rotary head of the present invention is provided with a rotary drum 42 and a stationary drum 44, and is the rotary head for recording/reproducing images in/from a tape-shaped magnetic recording medium. The rotary drum is molded into a rotary cylindrical body for bringing the tape-shaped magnetic recording medium into contact with the peripheral surface of the rotary cylindrical body and for traveling the tape-shaped magnetic recording medium by the rotation of the rotary drum. The stationary drum is molded into a cylindrical body having a similar diameter as the rotary drum for being arranged concentrically with the rotary drum and on the lower side of the rotary drum and for sliding the tape-shaped magnetic recording medium that is traveling in such a manner as to conform to the rotation of the rotary drum, on the peripheral surface of the cylindrical body of the stationary drum. In this rotary head, the rotary drum and the stationary drum are molded products which are molded out of ultrahigh molecular weight polyethylene, as a molding material, and are molded by injection molding. A rotary head having a rotary drum and a stationary drum which are molded out of a novel molding material, and furthermore, require no lathe machining is thus provided.

## Description

### BACKGROUND OF THE INVENTION

### Field of the Invention

The present invention relates to rotary heads, and more particularly to a rotary head provided with constitution so as to be easily manufacturable.

### Description of Related Art

Normally, recording/reproducing mechanisms in/from a rotary head type magnetic recording medium are used for audio equipment which reproduces/records sound from/in a magnetic tape, or a video tape recorder or the like which reproduces/records images from/in a magnetic tape. There are various forms with regard to a rotary head; however, the rotary head can roughly be divided into two types: one type which is provided with a rotary drum and a stationary drum and the other type which is provided with substantially a rotary drum alone.

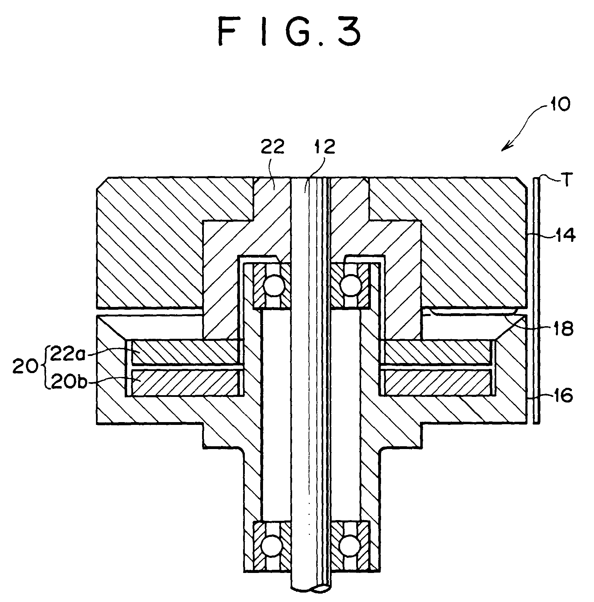

A rotary head 10 of a type provided with the rotary drum and the stationary drum is, generally, constituted of a cylindrical rotary drum 14 with low in height which rotates together with a rotary shaft 12 around the rotary shaft 12 as shown in Fig. 3 and of a nonrotatable cylindrical stationary drum 16 with low in height which has a similar diameter as the rotary drum 14 which is fixed to an equipment base or the like on the lower side of the rotary drum 14 and concentrically with respect to the rotary shaft 12.

The rotary drum 14 is provided on the lower side thereof with a magnetic recording medium head 18 which writes/reproduces the information to/from the magnetic tape, and the stationary drum 16 is provided on the inside thereof with a rotary transformer 20 which receives/transmits a recording signal/reproducing signal between the magnetic recording medium head 18 and an exterior signal processing system. The rotary transformer 20 is constituted of a rotary portion 20a which is fixed on the rotary drum 14 side through a carrier 22 and a stationary portion 20b which is fixed on the stationary drum 16 side, and the rotary portion 20a rotates against the stationary portion 20b. The carrier 22 may be integrally molded with the rotary drum 14, or the carrier may be integrated with the rotary drum 14 after being molded as a separate body as shown in Fig. 3.

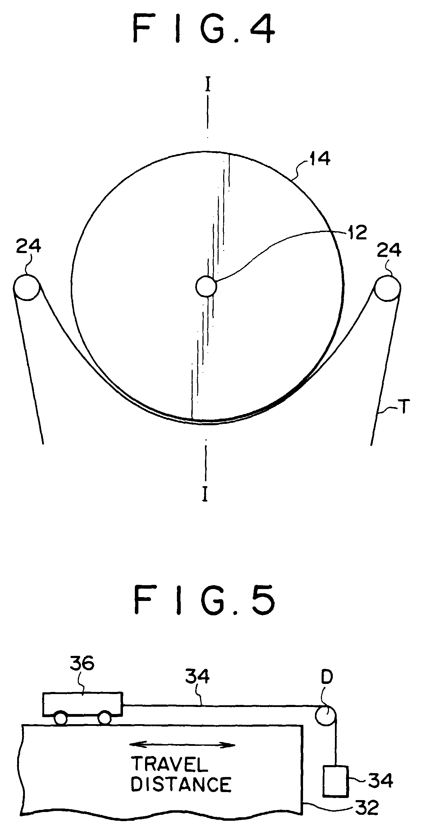

Further, tape guides 24 for guiding a magnetic tape T which travels along the periphery of the rotary drum 14 are arranged around the rotary head 10 as shown in Fig. 4.

The magnetic tape T is guided by the tape guides 24, reaches at the rotary head 10, rotates in such a manner as to conform to the rotation of the rotary drum 14 as well and slides and travels on the periphery of the stationary drum 16. Meanwhile, Fig. 3 shows a sectional view taken on line I-I of Fig. 4.

By the way, conventionally, the rotary drum 14 and the stationary drum 16 are manufactured by precision casting according to a die casting method using a metallic mold out of a metal such as an aluminum alloy as a raw material.

However, in case when the rotary drum and the stationary drum are formed by precise casting according to the die casting method, cast products of the aluminum alloy cast in a prescribed shape according to the die casting method are needed to perform cutting work piece by piece with good precision using a lathe.

Therefore, a lathe machining cost has expanded to have resulted in a huge problem from a standpoint of reducing a manufacturing cost of the rotary drum and the stationary drum.

Conventionally, carbon containing polyphenylene sulfide PPS, a liquid crystal polymer and the like are proposed as alternative molding materials to an aluminum alloy; however, when a low stiffness tape is applied and when the rotary drum rotates and the tape start travelling, there happened such a problem as the tape stuck to the peripheral surface of the rotary drum in a short time, and the proposal was extremely difficult to be brought into a practical use.

Above mentioned problem is explained through an example of the rotary head provided with the rotary drum and the stationary drum; however, a similar problem has also been experienced when the rotary head provided with the rotary drum alone is manufactured.

### SUMMARY OF THE INVENTION

Thus, the objective of the present invention is to provide a rotary head provided with the rotary drum and the stationary drum which are molded out of a novel molded material, which have such constitution as eliminating the necessity of lathe machining.

In the process of searching for a novel molding material, the present inventors gave attention to ultrahigh molecular weight polyethylene which is excellent in wear resistance as a molding material and comparatively excellent in moldability, and the rotary drum was trially molded by injection molding and they could confirm that the precise molding thereof was possible and that the rotary drum could be manufactured with no need for machining such as lathe machining after molding.

Hence, the following tests were conducted with the use of the rotary drum which was molded out of ultrahigh molecular weight polyethylene, as a molding material, according to an injection molding method.

As for the ultrahigh molecular weight polyethylene, the rotary drum having a diameter of 30 mm was molded out of pellets of the ultrahigh molecular weight polyethylene, "SJ×8000" (trade name), a product of Polyhighsolejoule Japan K.K., according to the injection molding method. The physical properties of "SJ×8000" are as follows:
Average Molecular Weight: 3.2×10⁶
Density (g/cc): 0.94
Average Grain Diameter of Powder (µm): 120

Next, a trially molded rotary drum was installed on a friction factor measuring device, and a friction factor between a tested rotary drum and an vapor deposition tape having a width 2.5 mm, total thickness 4.5 µm was measured.

A friction factor measuring device 30 is, as shown in Fig. 5,constituted of a test board 32, an vapor deposition tape 34 for measuring the friction factor between the tape and a tested rotary drum D, a strain gauge 36 which is mounted at one end of the vapor deposition tape 34 and for measuring tension of the vapor deposition tape 34 and a plumb 35 mounted at the lower end of the vapor deposition tape 34 which is lowering along the tested rotary drum D mounted at a corner of the test board 32.

The strain gauge 36 is to be traveled by the vapor deposition tape 34 at a predetermined distance, wherein the tape 34 is pulled with gravity of the plumb 35 and lowers while sliding along the tested rotary drum D at the speed of 13 mm/sec.

The friction factor between the vapor deposition tape 34 and the tested rotary drum can be calculated by reading a tension scale of the traveling strain gauge 36 and by calculating according to a well-known relational expression.

In the tests, an winding angle of the vapor deposition tape 34 to the tested rotary drum D was 90° and the lowering speed of the vapor deposition tape 34 was 13 mm/sec on condition that the weight of the plumb was 5 g.

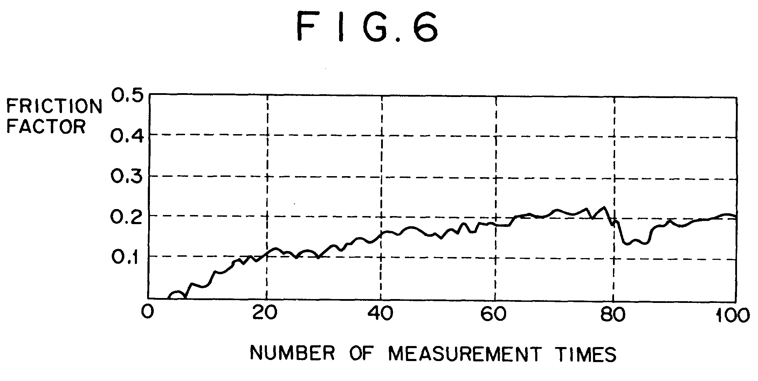

By returning the traveled strain gauge 36 to a former position, in similar manners, the tests for measuring the friction factor were conducted 100 times with repeating these processes, and obtained results from the tests are shown in Fig. 6. Meanwhile, during these tests of 100 times, the vapor deposition tape 34 has never stuck to the tested rotary drum D.

As will be understood from a graph shown in Fig. 6, the friction factors between the vapor deposition tape 34 and the tested drum were substantially stable with the values of 0.2 or less from the result of the tests of 100 times.

The same sort of tests, conducted with regard to the rotary drum molded out of the aluminum alloy of the related art, showed that the friction factors obtained were between 0.18 and 0.2 and could find substantially same results as the case of the rotary drum molded out of the ultrahigh molecular weight polyethylene. Meanwhile, in the case of the rotary drum molded respectively out of carbon containing PPS and a liquid crystal polymer, due to sticking of the tape to the rotary drum after the tests of several times, no more tests could continued.

Based on the above mentioned tests, for the purpose of achieving the above described objective, in the rotary head relating to the present invention (hereinafter, referred to as a first invention), and in a rotary head that is adapted to be recording/reproducing images in/from a tape-shaped magnetic recording medium, the rotary head comprising a rotary drum molded into the rotary cylindrical body for bringing the tape-shaped magnetic recording medium into contact with a peripheral surface of the rotary cylindrical body and for travelling the tape-shaped magnetic recording medium by the rotation of the rotary cylindrical body, and a stationary drum molded into the cylindrical body having a similar diameter as the rotary drum for being concentrically arranged with the rotary drum on the lower side of the rotary drum and for sliding the tape-shaped magnetic recording medium that is travelling in such a manner as to conform to the rotation of the rotary drum, on the peripheral surface of the rotary cylindrical body of the stationary drum,
the rotary head is characterized in that the rotary drum and the stationary drum are molded products molded out of ultrahigh molecular weight polyethylene as a molding material.

When the rotary head is substantially provided with the rotary drum alone, in the rotary head relating to the present invention (hereinafter, referred to as a second invention), and in a rotary head that is adapted to be recording/reproducing images in/from a tape-shaped magnetic recording medium, the rotary head comprising a rotary drum molded into a rotary cylindrical body for bringing the tape-shaped magnetic recording medium into contact with a peripheral surface of the rotary cylindrical body and for travelling the tape-shaped magnetic recording medium by the rotation of rotary cylindrical body,
the rotary head is characterized in that the rotary drum is a molded product molded out of ultrahigh molecular weight polyethylene as a molding material.

Preferably, the ultrahigh molecular weight polyethylene has the properties such that an average molecular weight thereof is in the range of 500,000 to 6,000,000 inclusive, and density thereof is in the range of 0.93 g/cc to 0.95 g/cc inclusive.

Further, preferably, the molded products molded out of the ultrahigh molecular weight polyethylene are molded by injection molding.

### BRIEF DESCRIPTION OF THE DRAWINGS

Figs. 1A and 1B show side elevations partly in sections illustrating respectively the constitution of essential portions with regard to a rotary drum, a stationary drum and the like of a rotary head in the embodiment 1 of the present invention;
Fig. 2 shows a side elevation partly in section illustrating the constitution of essential portions with regard to a rotary head in the embodiment 2 of the present invention;
Fig. 3 shows a sectional view illustrating the constitution of a conventional rotary head;
Fig. 4 shows a plan view illustrating travelling of a tape around a rotary head;
Fig. 5 shows a type view illustrating the constitution of a friction factor measuring device; and
Fig. 6 shows a graph with regard to a friction factor.

### DETAILED DESCRIPTION OF THE PREFERRED EMBODIMENTS

Hereinafter, the embodiments of the present invention will specifically and particularly be described with reference to the accompanying drawings.

### Embodiment 1

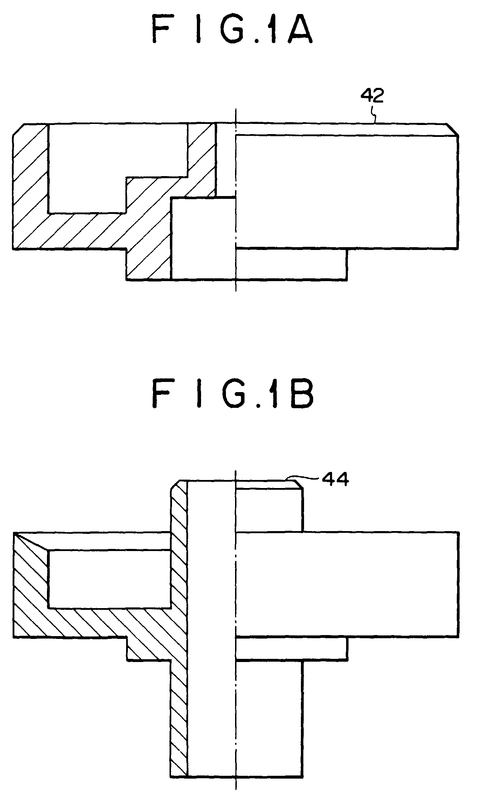

The embodiment of the present invention is an embodiment of a rotary head related to a first invention, and Figs. 1A and 1B show side elevations partly in sections illustrating respectively the constitution of essential portions with regard to a rotary drum, a stationary drum of the rotary head in the embodiment 1 of the present invention.

The rotary head in the embodiment of the present invention is provided with a rotary drum 42 shown in Fig. 1A and a stationary drum 44 shown in Fig. 1B. The rotary drum 42 is a component which rotates together with a rotary shaft 12 around the rotary shaft 12 shown in Fig. 3, and is a product which is integrally molded the rotary drum 14 with a carrier 22 in Fig. 3. The stationary drum 44 is a component equivalent to the stationary drum 16 shown in Fig. 3, and is nonrotatably fixed on the lower side of the rotary drum 42 to an equipment base and the like concentrically with respect to the rotary shaft 52.

The rotary drum 42 and the stationary 44 are molded out of pellets of ultrahigh molecular weight polyethylene, "SJ×8000" (trade name), a product of Polyhighsolejoule Japan K.K., according to the injection molding method.

### Embodiment 2

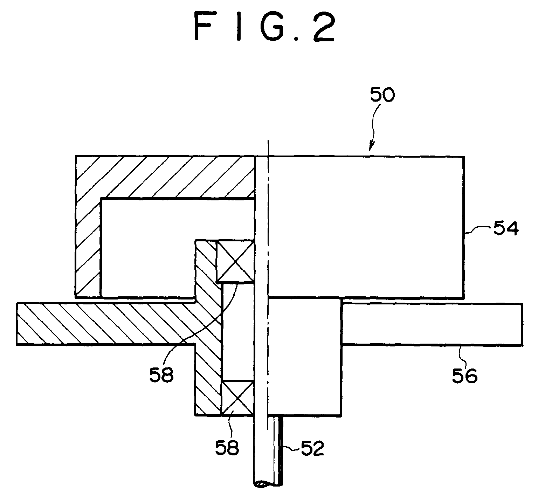

The embodiment of the present invention is an embodiment of a rotary head related to a second invention, and Fig. 2 shows a side elevation partly in section illustrating the constitution of essential portions with regard to a rotary head in the embodiment of the present invention.

A rotary head 50 in the present example of modes for carrying out the invention is the rotary head having substantially a rotary drum alone, and is provided with a rotary drum 54 which rotates together with a rotary shaft 52 around the rotary shaft 52 shown in Fig. 2 and with a nonrotatable tape guide disk 56. A tape guide disk 56 in the embodiment of the present invention is a component used to guide a position of a magnetic tape, not illustrated, which is traveling in such a manner as to conform to the rotation of the rotary drum 54.

In Fig. 2, numeral 58 designates bearings provided between the rotary shaft 54 and the tape guide disk 56. Further, in Fig. 2, only the essential portions of the rotary head 50 in the embodiment of the present invention are illustrated, but the components such as a magnetic recording medium head, a rotary transformer and the like are not illustrated.

In the embodiment of the present invention, the rotary drum 42 and the stationary drum 44 are molded out of pellets of ultrahigh molecular weight polyethylene, "SJ×8000" (trade name), a product of Polyhighsolyjoule Japan K.K., according to an injection molding method.

According to the present invention, an inexpensive and easily manufacturable rotary head is realized by constituting the components of the rotary head such as a rotary drum and a stationary drum and the like of the molded products which are molded out of ultrahigh molecular weight polyethylene and by eliminating the necessity of cost expansive machining such as lathe machining.

## Claims

1. A rotary head which is adapted to be recording/reproducing images in/from a tape-shaped magnetic recording medium, comprising a rotary drum molded into a rotary cylindrical body for bringing said tape-shaped magnetic recording medium into contact with a peripheral surface of said rotary cylindrical body and for traveling said tape-shaped magnetic recording medium by the rotation of said rotary cylindrical body, and a stationary drum molded into a cylindrical body having a similar diameter as said rotary drum for being concentrically arranged with said rotary drum on the lower side thereof and for sliding said tape-shaped magnetic recording medium that is travelling in such a manner as to conform to the rotation of said rotary drum, on the peripheral surface of said cylindrical body of said stationary drum,
said rotary drum and said stationary drum being molded products molded out of ultrahigh molecular weight polyethylene as a molding material.

2. A rotary head which is adapted to be recording/reproducing images in/from a tape-shaped magnetic recording medium, comprising a rotary drum molded into a rotary cylindrical body for bringing said tape-shaped magnetic recording medium into contact with a peripheral surface of said rotary cylindrical body and for traveling said tape-shaped magnetic recording medium by the rotation of said rotary cylindrical body, wherein said rotary drum is a molded product molded out of ultrahigh molecular weight polyethylene as a molding material.

3. A rotary head as set forth in claim 1 or 2, wherein said ultrahigh molecular weight polyethylene has such properties that an average molecular weight thereof is in the range of 500,000 to 6,000,000 inclusive, and density thereof is in the range of 0.93 g/cc to 0.95 g/cc inclusive.

4. A rotary head as set forth in claim 3, wherein said molded products are molded out of said ultrahigh molecular weight polyethylene, as a molding material, and are molded by injection molding.
